# FASCICULE DE BREVET EUROPEEN

(11) **EP 3 144 555 B1**
(45) Date de publication et mention de la délivrance du brevet: **01.11.2017**
(21) Numéro de dépôt: 16185030.0
(22) Date de dépôt: 19.08.2016
(51) Int. Cl.: F16D 55/36, F16D 65/847

(54) **PROCEDE POUR VENTILER DES DISQUES DE FREIN D`UNE ROUE D'AERONEF**
VERFAHREN ZUM ENTLÜFTEN VON BREMSSCHEIBEN EINES LUFTFAHRZEUGRADS
METHOD FOR VENTILATING BRAKE DISCS OF AN AIRCRAFT WHEEL

(30) Priorité: 27.08.2015 FR 1557958
(43) Date de publication de la demande: 22.03.2017
(73) Titulaire: Safran Landing Systems, 78140 Vélizy-Villacoublay (FR)
(72) Inventeur: GONZALEZ, Vincent, 78140 VELIZY-VILLACOUBLAY (FR); GAPIN, Arnaud, 78140 VELIZY-VILLACOUBLAY (FR)
(74) Mandataire: Lavaud, Thomas

(56) Documents cités:
- EP-A1- 0 483 719
- DE-B- 1 113 149
- FR-A- 1 439 992
- US-A- 3 664 467

## Description

L'invention concerne un procédé pour ventiler des disques de frein d'une roue d'aéronef.

### ARRIERE-PLAN TECHNOLOGIQUE DE L'INVENTION

On connaît des aéronefs dont les roues équipées d'un frein sont pourvues d'un ventilateur commandable pour refroidir les disques de frein, afin de faire baisser leur température rapidement et éviter ainsi de retarder le départ de l'aéronef pour une nouvelle rotation. En général, le corps du ventilateur est engagé à l'intérieur de l'essieu qui porte la roue, et sa turbine aspire l'air à travers des ouvertures de la jante de la roue. Cependant, le ventilateur ainsi disposé occupe une place importante dans l'essieu de sorte que l'axe du tachymètre pour mesurer la vitesse de rotation de la roue se trouve allongé pour traverser le ventilateur et atteindre la roue. Ceci amoindrit donc les mesures effectuées par le tachymètre.

On connaît par ailleurs, notamment dans le domaine automobile, des turbines solidarisées à la jante de la roue pour aspirer de l'air au travers de la jante de la roue. Ces turbines sont par exemple intégrées à un enjoliveur rapporté sur la jante.

Le Document FR 1 439 992 A divulgue un procédé de ventilation de disques d'un frein équipant une roue d'aéronef ayant une jante montée pour tourner sur un essieu d'un atterrisseur de l'aéronef, les disques de freins étant enfilés sur un tube de torsion du frein qui s'étend autour de l'essieu, le procédé comportant l'étape d'intégrer un compresseur pour aspirer de l'air sous le tube de torsion, et de renvoyer l'air ainsi aspiré par le compresseur par-dessus le tube de torsion vers les disques de freins.

### OBJET DE L'INVENTION

L'invention a pour objet de proposer un procédé pour ventiler des disques de frein d'une roue d'aéronef sans monopoliser l'intérieur de l'essieu, ni cacher la jante.

### PRESENTATION DE L'INVENTION

En vue de la réalisation de ce but, on propose un procédé de ventilation de disques d'un frein équipant une roue d'aéronef ayant une jante montée pour tourner sur un essieu d'un atterrisseur de l'aéronef, les disques de frein étant enfilés sur un tube de torsion du frein qui s'étend autour de l'essieu, le procédé comportant l'étape d'intégrer un compresseur dans un espace s'étendant à l'intérieur du tube de torsion pour aspirer de l'air sous le tube de torsion, et de renvoyer l'air ainsi aspiré par le compresseur par-dessus le tube de torsion vers les disques de freins.

Ainsi, le compresseur est complètement intégré dans la roue, en s'étendant dans un espace situé entre le tube de torsion et l'essieu, et n'occupe donc pas l'intérieur de l'essieu qui est dès lors libre de recevoir un tachymètre, et laisse la jante libre pour son inspection visuelle et l'accès à la valve de gonflage. De façon avantageuse, le tachymètre peut avoir un axe de dimension relativement réduite ce qui permet d'améliorer la qualité de ses mesures.

### DESCRIPTION DES FIGURES

L'invention sera mieux comprise à la lumière de la description qui suit en référence aux figures des dessins annexés, parmi lesquelles :
- la figure 1 est une vue en coupe axiale d'une jante de roue montée sur un essieu d'atterrisseur d'aéronef et équipée selon un premier mode de mise en oeuvre de l'invention d'un compresseur axial installé entre le tube de torsion et l'essieu ;
- la figure 2 est une coupe partielle dans un autre plan de la jante de la figure 1, montrant les passages d'air alimentant le compresseur ;
- la figure 3 est une vue analogue à celle de la figure 1 d'une première variante de la première mise en oeuvre, dans laquelle la jante comporte des ouvertures bouchées ;
- la figure 4 est une vue analogue à celle de la figure 1 d'une deuxième variante de la première mise en oeuvre, dans laquelle la jante comporte des ouvertures non bouchées ;
- la figure 5 est une vue analogue à celle de la figure 1 d'un deuxième mode de mise en oeuvre dans lequel un compresseur axial est installé entre le tube de torsion et une partie de moyeu de la jante ;
- la figure 6 est une vue analogue à celle de la figure 1 d'un troisième mode de mise en oeuvre de l'invention, mettant en oeuvre un compresseur centrifuge installé entre le tube de torsion et l'essieu ;
- la figure 7 est une vue en perspective de la roue à aubes du compresseur de la figure 6 ;
- la figure 8 est une vue analogue à celle de la figure 4 d'un quatrième mode de mise en oeuvre de l'invention utilisant une volute ;
- la figure 9 est une vue en perspective de la volute et de la roue à aubes de la figure 8 ;
- la figure 10 est une vue analogue à celle de la figure 1 d'une variante du quatrième mode de mise en oeuvre de l'invention, dans laquelle le voile de la demi-jante est fermé.

### DESCRIPTION DETAILLEE DE MODES DE MISE EN OEUVRE DE L'INVENTION

L'invention s'applique à une roue 1 d'aéronef comprenant une jante 2, comportant ici deux demi-jantes 2a, 2b assemblées par des boulons 3, et montée pour tourner sur un essieu 4 au moyen de roulements 5 portés par un moyeu 6 de la jante 2. La roue 1 est équipée d'un frein 10 comportant des disques de frein 11, dont des disques stators 11a et des disques rotor 11b, qui sont enfilés sur un tube de torsion 12 fixé à une main d'essieu 13 par des boulons 14. Le frein 10 comporte un support 15 d'actionneurs de freinage 16 adaptés à appliquer sélectivement un effort de freinage sur la pile de disques 11.

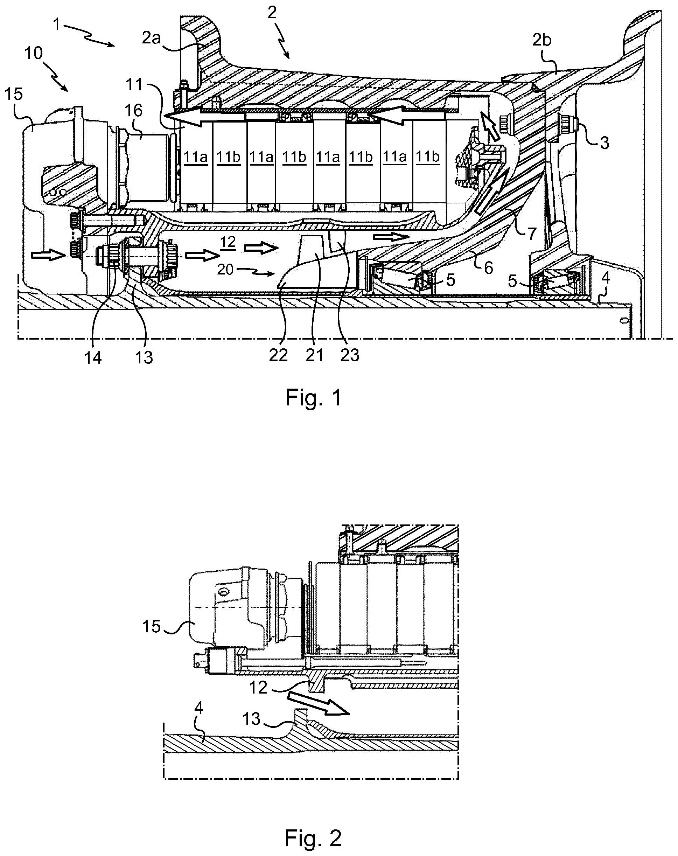

Conformément à un premier mode de mise en oeuvre de l'invention illustré à la figure 1, on dispose à l'intérieur du tube de torsion 12, un compresseur axial 20 comportant des aubes tournantes 21 montées sur un anneau 22 solidaire de la jante 2 et donc tournant avec la roue, et d'aubes redresseuses fixes 23 solidaires du tube de torsion. L'air est aspiré par le compresseur 20 par les espaces entre le tube de torsion 12 et la main d'essieu 13 (visibles à la figure 2), refoulé vers l'intérieur de la jante et poussé par-dessus le tube de torsion 12 entre les disques de frein 11 et la jante 2 pour ressortir par-dessus les actionneurs de freinage 16. L'air parcourt ainsi un circuit à l'intérieur de la demi-jante 2a de part et d'autre du tube de torsion 12, comme indiqué par les flèches sur la figure.

On remarquera que le voile 7 de la demi-jante 2a qui s'étend pour relier le moyeu 6 au reste de la jante est fermé et ne comporte pas d'ouvertures d'aération qui permettraient aux flux d'air de s'évacuer au travers de la jante vers l'extérieur. Cette absence d'alvéoles simplifie la conception de la jante. La demi-jante 2a joue alors le rôle d'un déflecteur qui force le flux d'air en provenance du compresseur 20 vers les disques de frein 11.

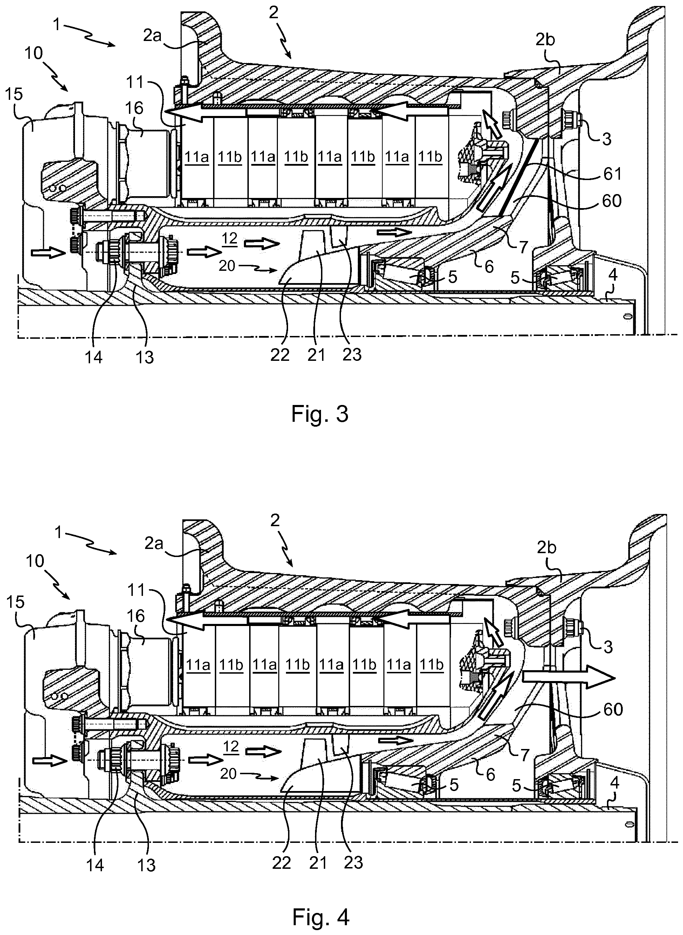

En référence à la figure 3, selon une première variante du premier mode de mise en oeuvre, la jante 2 comporte ici des ouvertures d'aération 60 au niveau du voile 7 de la demi-jante 2a encore appelées alvéoles de ventilation. Ces ouvertures d'aération 60 comportent ici des caches 61 aptes à boucher les ouvertures. De la sorte, malgré la présence des ouvertures d'aération 60, le flux d'air ne peut s'évacuer à travers la jante vers l'extérieur. L'air parcourt ainsi un circuit à l'intérieur de la demi-jante 2a de part et d'autre du tube de torsion 12 comme indiqué par les flèches sur la figure 3.

En référence à la figure 4, selon une deuxième variante du première mode de mise en oeuvre, la jante 2 comporte ici des ouvertures d'aération 60 au niveau du voile 7 de la demi-jante 2a.

Les ouvertures d'aération 60 ne comportent ici aucun cache de sorte qu'une partie du flux s'évacue à travers la jante vers l'extérieur, l'autre partie du flux d'air étant poussé entre les disques de frein 11 et la jante 2 pour ressortir par-dessus les actionneurs de freinage 16.

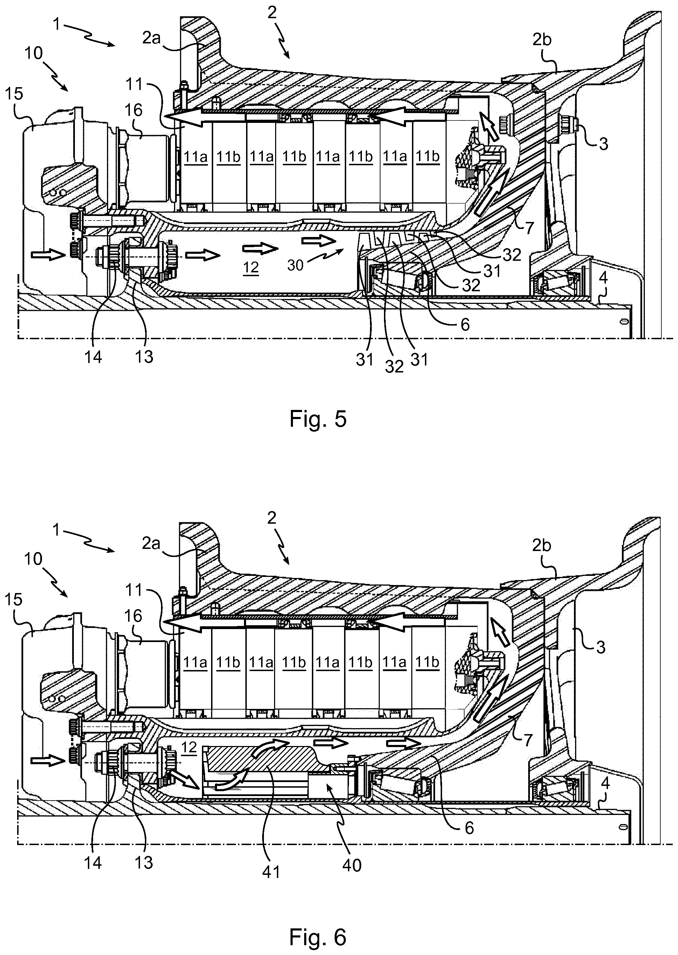

Selon un deuxième mode de mise en oeuvre de l'invention illustré à la figure 5, le compresseur axial 30 est toujours installé à l'intérieur du tube de torsion 12, mais il s'étend ici plus précisément entre le tube de torsion 12 et le moyeu 6 de la jante 2. La turbine 30 comporte ici trois étages successifs comprenant chacun des aubes tournantes 31 suivies d'aubes redresseuses fixes 32. Le fonctionnement du compresseur axial 30 est identique à celui du compresseur axial 20.

Comme pour les variantes du premier mode de mise en oeuvre, le voile 7 de la demi-jante 2a pourra, en variante, comporter des ouvertures obstruées ou non.

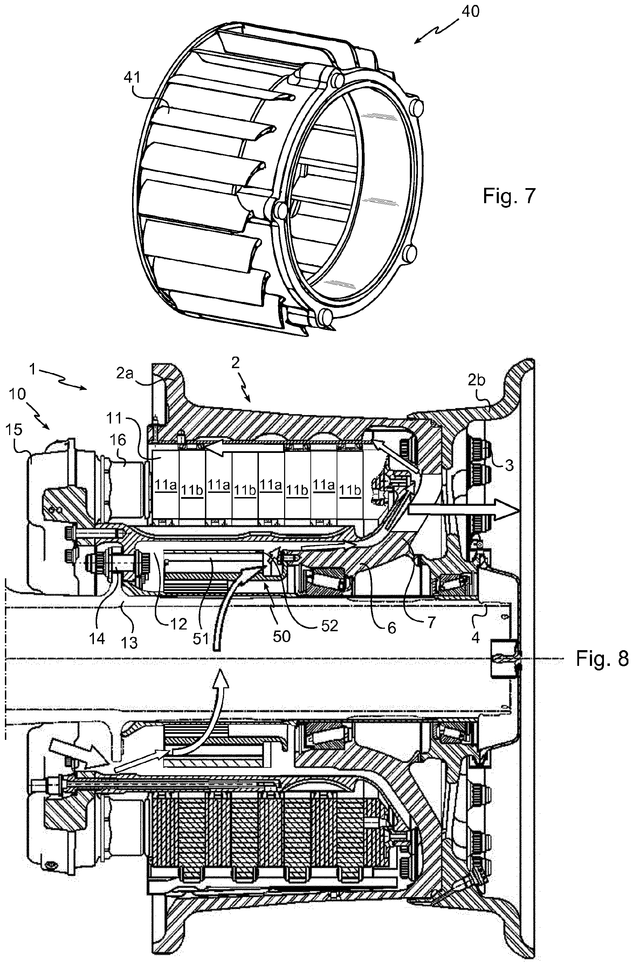

Selon un troisième mode de mise en oeuvre illustré aux figures 6 et 7, la roue est maintenant équipée d'un compresseur centrifuge 40 (ou compresseur radial), qui s'étend toujours à l'intérieur du tube de torsion 12. Le compresseur 40 est ici un compresseur comportant une roue à aubes 41 (une seule aube est référencée ici) qui est solidaire en rotation de la roue. La roue à aubes aspire l'air sur les 360 degrés du diamètre intérieur de la roue à aubes 41. L'air compressé est ensuite éjecté par le compresseur 40 sur les 360 degrés du diamètre extérieur du compresseur et donc en partie vers le tube de torsion 12, l'air s'échappant alors en passant par-dessus le tube de torsion 12 entre la jante et les disques de freins, comme précédemment.

Comme pour les variantes du premier mode de mise en oeuvre, le voile 7 de la demi-jante 2a pourra, en variante, comporter des ouvertures obstruées ou non.

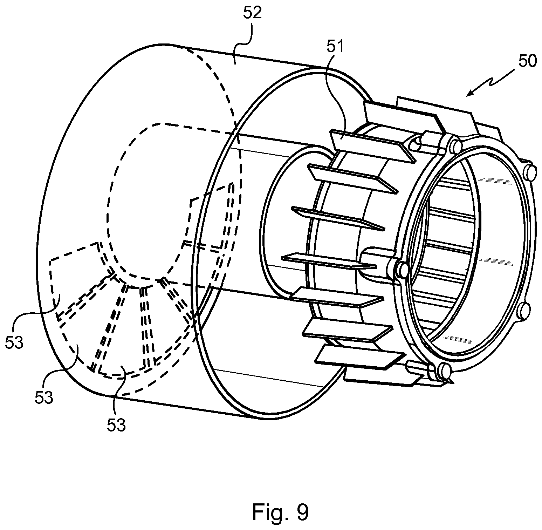

Selon un quatrième mode de mise en oeuvre illustré aux figures 8, 9, le compresseur 50 est toujours de type centrifuge, mais comporte maintenant une roue à aubes 51 et une volute 52, la roue à aubes 51 tournant à l'intérieur de la volute 52. La volute 52 est ici désaxée relativement à la roue à aubes 51. La volute 52 comporte ici des entrées d'air 53 dans sa partie la plus large.

On constate ici que le voile 7 de la demi-jante 2a comporte des ouvertures d'aération 50 qui sont non obstruées.

De par l'action centrifuge du compresseur 50, l'air est aspiré par la partie basse du compresseur 50 au niveau des ouvertures 53 de la volute 52 et rejeté sur les 360 degrés du diamètre extérieur du compresseur 50 de sorte à être refoulé vers l'intérieur de la jante. L'air est ensuite :
- de façon minoritaire, poussé par-dessus le tube de torsion 12 entre les disques de frein et la jante 2 pour ressortir par-dessus les actionneurs de freinage 16,
- et de façon majoritaire, poussé vers l'extérieur à travers les ouvertures d'aération 60.

L'air parcourt ainsi un circuit à l'intérieur de la demi-jante 2a de part et d'autre de l'essieu 4 puis de part et d'autre du tube de torsion, comme indiqué par les flèches sur la figure 8.

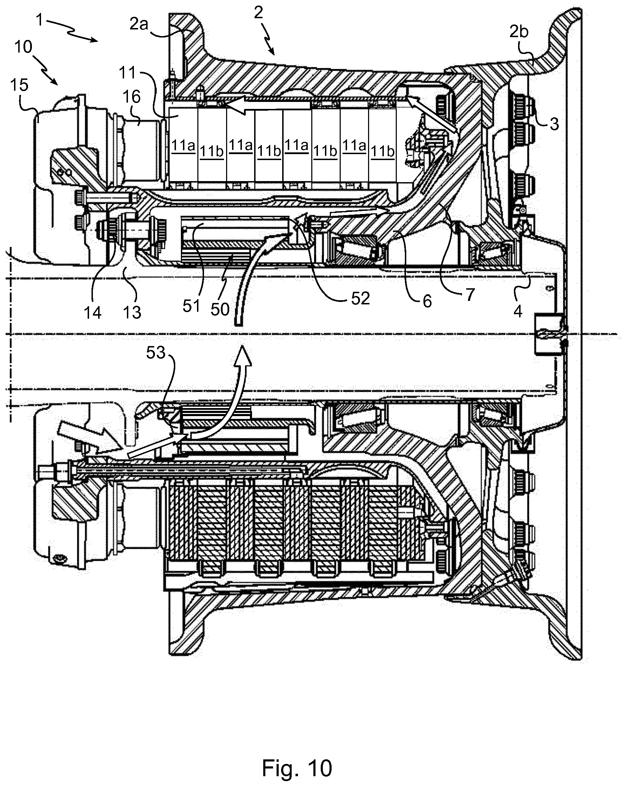

En variante, comme illustré à la figure 10, le voile 7 de la demi-jante 2a est fermé de sorte que l'air n'est évacué qu'au niveau des actionneurs de freinage. Alternativement, le voile pourra comporter des ouvertures d'aération obstruées en totalité ou en partie par des caches.

L'invention n'est pas limitée à ce qui vient d'être décrit, mais englobe au contraire toute variante entrant dans le cadre défini par les revendications.

En particulier, bien qu'ici les parties mobiles des compresseurs tournent avec la roue, elles pourront être motorisées pour tourner indépendamment de la roue.

Bien que le renvoi de l'air aspiré par le compresseur par-dessus le tube de torsion est assuré par le voile fermé de la roue, on pourra utiliser des roues dont les jantes présentent des ouvertures (alvéoles de ventilation), en adaptant éventuellement un cache léger adapté à boucher ces ouvertures.

Bien que les aubes tournantes soient ici suivies d'aubes redresseuses, on pourra se passer de ces dernières, le compresseur ne comportant alors que des aubes tournantes.

Dans le cas où le compresseur comportera des aubes celles-ci pourront tout aussi bien être des aubes droites que des aubes incurvées préférentiellement dans le sens de rotation préférée de la roue.

De même, dans le cas où le compresseur comportera des aubes celles-ci pourront être indifféremment courtes ou longues quel que soit le compresseur utilisé.

Dans le cas d'un compresseur radial, celui-ci pourra être conformé de sorte que de l'air soit aspiré selon 360° de son orifice d'entrée ou de sorte que de l'air soit aspiré selon un secteur angulaire seulement de son orifice d'entrée. De préférence, le secteur angulaire sera alors agencé de sorte que le compresseur aspire l'air depuis sa portion inférieure.

Par ailleurs, dans le cas d'un compresseur radial, celui-ci pourra être conformé de sorte que l'air comprimé soit rejeté selon 360° de son orifice de sortie ou de sorte que l'air comprimé soit rejeté selon un secteur angulaire seulement de son orifice de sortie. De préférence, le secteur angulaire sera alors agencé de sorte que le compresseur rejette l'air comprimé depuis sa portion supérieure vers le haut du tube de torsion et le voile supérieur de la jante.

Dans le cas d'un compresseur radial comme d'un compresseur axial, le procédé pourra comporter l'étape supplémentaire d'associer un multiplicateur au compresseur par exemple en agençant le multiplicateur entre la roue et le compresseur.

## Revendications

1. Procédé de ventilation de disques (11) d'un frein (10) équipant une roue (1) d'aéronef ayant une jante (2) montée pour tourner sur un essieu (4) d'un atterrisseur de l'aéronef, les disques de freins étant enfilés sur un tube de torsion (12) du frein qui s'étend autour de l'essieu, le procédé comportant l'étape d'intégrer un compresseur (20 ; 30 ; 40) dans un espace s'étendant à l'intérieur du tube de torsion pour aspirer de l'air sous le tube de torsion, et de renvoyer l'air ainsi aspiré par le compresseur par-dessus le tube de torsion vers les disques de freins.

2. Procédé selon la revendication 1, dans lequel le compresseur est du type axial et comprend au moins un étage comprenant des aubes tournantes (21 ; 31) suivies d'aubes redresseuses fixes (23 ; 32).

3. Procédé selon la revendication 2, dans lequel les aubes tournantes ne sont pas suivies d'aubes redresseuses fixes.

4. Procédé selon la revendication 1, dans lequel le compresseur est du type centrifuge (40, 50).

5. Procédé selon la revendication 4, dans lequel le compresseur (40, 50) est conformé de sorte qu'il aspire de l'air seulement au niveau de sa partie inférieure.

6. Procédé selon l'une des revendications 4 à 5, dans lequel le compresseur (40, 50) est conformé de sorte qu'il éjecte de l'air comprimé seulement au niveau de sa partie supérieure par-dessus le tube de torsion.

7. Procédé selon l'une des revendications 4 à 6, dans lequel le compresseur comprend une roue à aubes (51) associée à une volute (52) du compresseur.

8. Procédé selon l'une des revendications 1 à 7, dans lequel la jante comporte un voile fermé (7) adapté à renvoyer un flux d'air généré par le compresseur vers les disques de frein.

9. Procédé selon l'une des revendications 1 à 7, dans lequel la jante comporte des ouvertures (60) au niveau du voile (7).

10. Procédé selon la revendication 9, dans lequel les ouvertures (60) comportent des caches (61) aptes à obturer au moins en partie lesdites ouvertures.

11. Procédé selon l'une des revendications 1 à 10, dans lequel le compresseur (40, 50) comporte des aubes droites.

12. Procédé selon l'une des revendications 1 à 11, dans lequel le compresseur (40, 50) comporte des aubes incurvées.

## Patentansprüche

1. Verfahren zum Belüften von Scheiben (11) einer Bremse (10), mit der ein Luftfahrzeugrad (1) ausgestattet ist, das eine Felge (2) hat, die drehbar auf einer Radachse (4) eines Fahrwerks des Luftfahrzeugs gelagert ist, wobei die Bremsscheiben auf ein Torsionsrohr (12) der Bremse aufgeschoben sind, das sich um die Radachse herum erstreckt, wobei das Verfahren den Schritt des Integrierens eines Kompressors (20; 30; 40) in einen Raum umfasst, der sich im Inneren des Torsionsrohrs erstreckt, um Luft unter dem Torsionsrohr anzusaugen und die so von dem Kompressor angesaugte Luft über dem Torsionsrohr in Richtung der Bremsscheiben zurückzuschicken.

2. Verfahren nach Anspruch 1, bei dem der Kompressor vom Typ axialer Kompressor ist und mindestens eine Stufe umfasst, die Laufschaufeln (21; 31) gefolgt von ortsfesten Leitschaufeln (23; 32) umfasst.

3. Verfahren nach Anspruch 2, bei dem auf die Laufschaufeln keine ortsfesten Leitschaufeln folgen.

4. Verfahren nach Anspruch 1, bei dem der Kompressor vom Typ Zentrifugalkompressor (40, 50) ist.

5. Verfahren nach Anspruch 4, bei dem der Kompressor (40, 50) so konstruiert ist, dass er Luft nur im Bereich seines unteren Abschnittes ansaugt.

6. Verfahren nach einem der Ansprüche 4 bis 5, bei dem der Kompressor (40, 50) so konstruiert ist, dass er die komprimierte Luft nur im Bereich seines oberen Abschnittes über dem Torsionsrohr ausstößt.

7. Verfahren nach einem der Ansprüche 4 bis 6, bei dem der Kompressor ein Schaufelrad (51) umfasst, das mit einem Spiralgehäuse (52) des Kompressors verbunden ist.

8. Verfahren nach einem der Ansprüche 1 bis 7, bei dem die Felge eine geschlossene Abschirmung (7) umfasst, die dazu geeignet ist, einen von dem Kompressor erzeugten Luftstrom in Richtung der Bremsscheiben zurückzuschicken.

9. Verfahren nach einem der Ansprüche 1 bis 7, bei dem die Felge Öffnungen (60) im Bereich der Abschirmung (7) umfasst.

10. Verfahren nach Anspruch 9, bei dem die Öffnungen (60) Abdeckungen (61) umfassen, die dazu geeignet sind, die genannten Öffnungen zumindest teilweise zu verschließen.

11. Verfahren nach einem der Ansprüche 1 bis 10, bei dem der Kompressor (40, 50) geradlinige Schaufeln umfasst.

12. Verfahren nach einem der Ansprüche 1 bis 11, bei dem der Kompressor (40, 50) gebogene Schaufeln umfasst.

## Claims

1. Method for ventilating discs (11) of a brake (10) fitted to an aircraft wheel (1) having a rim (2) mounted so as to rotate on an axle (4) of a landing gear of the aircraft, the brake discs being threaded onto a torsion tube (12) of the brake which extends around the axle, the method comprising the step of integrating a compressor (20; 30; 40) into a space extending inside the torsion tube in order to draw in air beneath the torsion tube and to return the air thus drawn in by the compressor over the torsion tube towards the brake discs.

2. Method according to Claim 1, in which the compressor is of the axial type and comprises at least one stage comprising rotating blades (21; 31) followed by fixed stator vanes (22; 32).

3. Method according to Claim 2, in which the rotating blades are not followed by fixed stator vanes.

4. Method according to Claim 1, in which the compressor is of the centrifugal type (40, 50).

5. Method according to Claim 4, in which the compressor (40, 50) is designed such that it draws in air only in its lower portion.

6. Method according to either of Claims 4 and 5, in which the compressor (40, 50) is designed such that it ejects compressed air only in its upper portion over the torsion tube.

7. Method according to one of Claims 4 to 6, in which the compressor comprises a bladed wheel (51) associated with a volute (52) of the compressor.

8. Method according to one of Claims 1 to 7, in which the rim comprises a closed web (7) that is able to redirect a flow of air generated by the compressor towards the brake discs.

9. Method according to one of Claims 1 to 7, in which the rim comprises openings (60) in the web (7).

10. Method according to Claim 9, in which the openings (60) comprise covers (61) that are able to at least partially block said openings.

11. Method according to one of Claims 1 to 10, in which the compressor (40, 50) comprises straight blades.

12. method according to one of Claims 1 to 11, in which the compressor (40, 50) comprises curved blades.
